# EUROPEAN PATENT APPLICATION

(11) **EP 2 680 575 A1**
(43) Date of publication of application: **01.01.2014**
(21) Application number: 12761125.9
(22) Date of filing: 19.03.2012
(51) Int. Cl.: H04N 7/173

(54) **METHOD AND SYSTEM FOR WATCHING SERVICE IN INTERNET PROTOCOL TELEVISION**

(30) Priority: 18.03.2011 CN 201110066969
(71) Applicant: Huawei Device Co., Ltd., Longgang District Shenzhen Guangdong 518129 (CN)
(72) Inventor: FAN, Shunan, Shenzhen Guangdong 518129 (CN); WANG, Lei, Shenzhen Guangdong 518129 (CN); GAO, Wenmei, Shenzhen Guangdong 518129 (CN); LV, Xiaoqiang, Shenzhen Guangdong 518129 (CN)
(74) Representative: Lord, Michael
(86) International application number: PCT/CN2012/072503
(87) International publication number: WO 2012/126339

(57) **Abstract**

The embodiments of the present invention provide a method for watching service content of an Internet protocol television. The method includes: receiving a request message requesting playing, on a second network television terminal, service content subscribed by a first network television terminal; obtaining a service profile of a first terminal and an identifier of a second terminal according to the request message; and sending the service content subscribed by the first terminal to the second terminal according to the service profile of the first terminal and the identifier of the second terminal. By means of the present invention, a user may implement secure authentication by using a subscribed terminal and instruct an IPTV network side to send related service content to the second terminal according to IPTV subscription information of the first terminal.

## Description

### CROSS-REFERENCE TO RELATED APPLICATIONS

This application claims priority to Chinese Patent Application No. 201110066969.5, filed with the Chinese Patent Office on March 18, 2013 and entitled "METHOD AND SYSTEM FOR WATCHING SERVICE IN INTERNET PROTOCOL TELEVISION", which is incorporated herein by reference in its entirety.

### TECHNICAL FIELD

The present invention relates to the field of Internet protocol television (IPTV), and in particular, to a method and a system for watching a service in an Internet television.

### BACKGROUND

An IPTV (Internet Protocol Television) Internet protocol television, commonly known as an interactive network television, is a manageable multimedia service that transmits television, video, texts, images, and data over an IP network and provides QoS (quality of service)/QoE (quality of experience), security, interactivity and reliability. The IPTV technology integrates a plurality of technologies such as an Internet technology, a multimedia technology, and a communication technology, uses a broadband network as infrastructure, uses a household television, a personal computer, a mobile phone, and the like as a major display terminal, and provides a user with various interactive multimedia services including digital television programs by using an IP protocol. The major feature of the IPTV is that it changes a traditional one-way broadcast media transmission mode so that a user may receive a service on demand. The IPTV technology implements real-time interaction between a user and a media content provider to better meet the personalized requirement of the user.

An IPTV control function entity distributes an IPTV service to an authorized user, interacts with an authentication and session management (ASM) (Authentication and Session Management) function entity, and routes received and sent request messages to correct target receiving terminals. At the same time, the IPTV control function entity interacts with entities related to IPTV subscription data and charging.

In an IPTV system, a user may store the subscription information of the user in an IPTV service profile (IPTV Service Profile). When the user requests an IPTV service, an IPTV service provider (IPTV Service Provider) may provide the service according to the subscription information in the IPTV service profile. The information of the IPTV service profile may be updated by a service provider or another authorized terminal user. The subscription information stored in the IPTV service profile includes: a range of programs that the user is authorized to watch; a bookmark (Bookmark) set by the user to the previously watched programs, where after the bookmark is retrieved by the user, the user may continue to watch the previously watched program according to the bookmark; and a personalized channel PCH set by the user, which is used to subscribe to the program preferred by the user. The IPTV service profile further includes preference information of the user.

An IPTV system further defines a user database (User Database), which is used to ensure that a subscribed user may be authorized to access an IPTV service platform, and to store some information which is not related to an IPTV service, such as authentication information and communication-related information. The authentication process of an IPTV user is that the authentication information in an IMS subsystem subscriber identity module (ISIM) and a universal subscriber identity module (USIM) application module (USIM application) in an IP multimedia system gateway IG (IMS Gateway) is used by the IG to perform authentication with an ASM and a user database through a service platform provider so that the user may get access and use the IPTV service.

A universal integrated circuit card (UICC) (Universal Integrated Circuit Card) is a mobile smart card and is used to store information such as user information, authentication private keys, a telephone directory, and short messages. A UICC may include a plurality of logic applications, such as a subscriber identity module (SIM) (Subscriber Identity Module), a universal subscriber identity module (USIM) (Universal Subscriber Identity Module), an IP multimedia service identity module (ISIM, IP Multimedia Service Identity Module). Of course, the UICC may further include other applications (an electronic wallet and the like).

If a user expects to use an IMS-based service, the user must have one or more IMS private user identities (IMPI) (IMS Private User Identities), which are assigned by a network operator and later used for service registration, authentication, management, and charging. The IMPI is stored in a UICC and an HSS (home subscriber server, Home Subscriber Server) and identifies the subscription relationship of the user. The IMPI may be used to identify and obtain the subscription information related to the user.

Each user may have one or more IMS public user identities IMPU (IMS Public User Identities), and the IMPU is associated with and bound to the IMPI.

In the prior art, a user performs authentication through a UICC, including using an ISIM card or a USIM application to perform authentication, to obtain the permission to access the network provided by an IPTV service provider and use an IPTV-related service provided by the network of the IPTV service provider. After the user accesses the network, the IPTV service provider may obtain, according to identity information used by the user, the subscription information about the user in an IPTV service profile and provide the service subscribed by the user. For example, when a user watches an IPTV service at home, the user is authenticated to use the network provided by the IPTV service provider through an inserted card. The IPTV service provider provides, according to the identification information of the user bound to the user card, the service subscribed by the user to the user, that is, related content in the IPTV service profile. For example, after a user requests setting a Bookmark, the user may retrieve the bookmark previously set by the user and continue to watch the program. Or, the user retrieves information of a personalized channel (PCH) of the user set in the IPTV service profile, and watches the personalized channel set by the user, a preferred program, and the like. In the prior art, the basic process for creating/storing a Bookmark and the process for retrieving the Bookmark are provided.

For example, a user that has a UICC card at home registers with the network through the preceding IMPI and obtains subscription information.

In the prior art, if the user is not at home, for example, the user is in another place or at the home of a friend, the user cannot obtain the subscription information that the user subscribes to and cannot continue to watch the content related to the subscription relationship of the user through a non-home device. Therefore, the following application scenarios are considered as examples:
User A subscribes to an IPTV service at home through a home UICC, and sets some information related to an IPTV service profile, for example, setting a Bookmark for certain content or setting a PCH. When user A goes out (for example, at the home of a friend, in a hotel, and the like), user A expects to use terminal B to continue to watch the content related to the service information in the IPTV service profile subscribed by the user, and enjoy the user experience as good as it is at home, and yet does not need to pay for network resources again and uses network resources of the friend's home or the hotel.

However, as the current subscription relationship is bound to the UICC card, terminal B used when user A goes out cannot obtain subscription information of user A by providing its IMPI. Terminal B is considered as a device that illegally obtains the subscription information of user A. For example, terminal B at the home of a friend may obtain subscription information of the friend. Therefore, for the preceding scenario, the prior art does not provide the function of obtaining subscription data of user A by using terminal B.

To sum up, the following problems exist in the prior art:
1. Generally, a user accesses the service platform of the IPTV service provider through UICC authentication. If a user is not at home, and uses other devices with different UICCs, the user cannot access the information of the IPTV service profile subscribed by the user through other IPTV terminals; and
2. If a user watches content through his own terminal, for example, in a hotel, the user cannot, by using IPTV network resources and a terminal at the place where the user is located, watch the content related to the information of the IPTV service profile set by the user, for example, a bookmark, a set personalized channel and other service information, which results in bad user experience outside unlike that at home.

### SUMMARY

The present invention aims to provide a method and a system for watching a service in an Internet protocol television so that a user may obtain, through one terminal, an IPTV subscription content subscribed by the user through another terminal.

An embodiment of the present invention provides a method for watching service content of an Internet protocol television. The method includes: receiving a request message requesting playing, on a second terminal, service content subscribed by a first terminal; obtaining a service profile of the first terminal and an identifier of the second terminal according to the request message; and sending the service content subscribed by the first terminal to the second terminal according to the service profile of the first terminal and the identifier of the second terminal.

An embodiment of the present invention provides a system for watching service content of an Internet protocol television, including: an authentication and session management unit, configured to receive a request message requesting playing, on a second terminal, service content subscribed by a first terminal, where the request message carries an identifier of the second terminal; an Internet protocol television service profile server, configured to store an Internet protocol television service profile; and an Internet protocol television control device, configured to obtain a service profile of the first terminal from the Internet protocol television service profile server according to the request message sent by the authentication and session management unit and send the service content subscribed by the first terminal to the second terminal according to the service profile of the first terminal and the identifier of the second terminal.

An embodiment of the present invention provides an Internet protocol television control device, including: a receiving module, configured to receive a request message requesting playing, on a second terminal, service content subscribed by a first terminal; an obtaining module, configured to obtain a service profile of the first terminal and an identifier of the second terminal according to the request message; and a sending module, configured to send the service content subscribed by the first terminal to the second terminal according to the service profile of the first terminal and the identifier of the second terminal.

According to the embodiments of the present invention, a user may implement secure authentication by using a subscribed terminal and instruct an IPTV network side to send related service content to a second terminal according to IPTV subscription information of a first terminal.

### BRIEF DESCRIPTION OF DRAWINGS

To illustrate the technical solutions of the embodiments of the present invention more clearly, the following briefly describes the accompanying drawings required for describing the embodiments or the prior art. Apparently, the accompanying drawings in the following description merely show some embodiments of the present invention, and a person of ordinary skill in the art may derive other drawings from these drawings without creative efforts. In the drawings:
FIG. 1 is a flowchart of a method for watching IPTV service content according to Embodiment 1 of the present invention;
FIG. 2A and FIG. 2B are a sequence diagram of a method for watching IPTV service content according to Embodiment 1 of the present invention;
FIG. 3A to FIG. 3C are block diagrams of systems for watching IPTV service content according to an embodiment of the present invention;
FIG. 4 is a flowchart of a method for watching IPTV service content according to Embodiment 2 of the present invention;
FIG. 5A and FIG. 5B a sequence diagram of a method for watching IPTV service content according to Embodiment 2 of the present invention;
FIG. 6 is a flowchart of a method for watching IPTV service content according to Embodiment 3 of the present invention;
FIG. 7A and FIG. 7B are a sequence diagram of a method for watching IPTV service content according to Embodiment 3 of the present invention;
FIG. 8 is a block diagram of a system for watching IPTV service content according to an improvement embodiment of the present invention;
FIG. 9 is a flowchart of a method for watching IPTV service content according to Embodiment 4 of the present invention;
FIG. 10 is a sequence diagram of a method for watching IPTV service content according to Embodiment 4 of the present invention; and
FIG. 11 is a sequence diagram of a method for watching IPTV service content according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

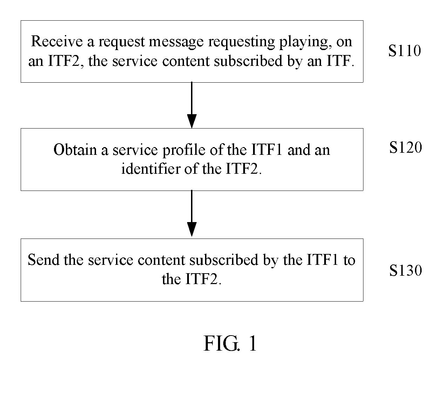

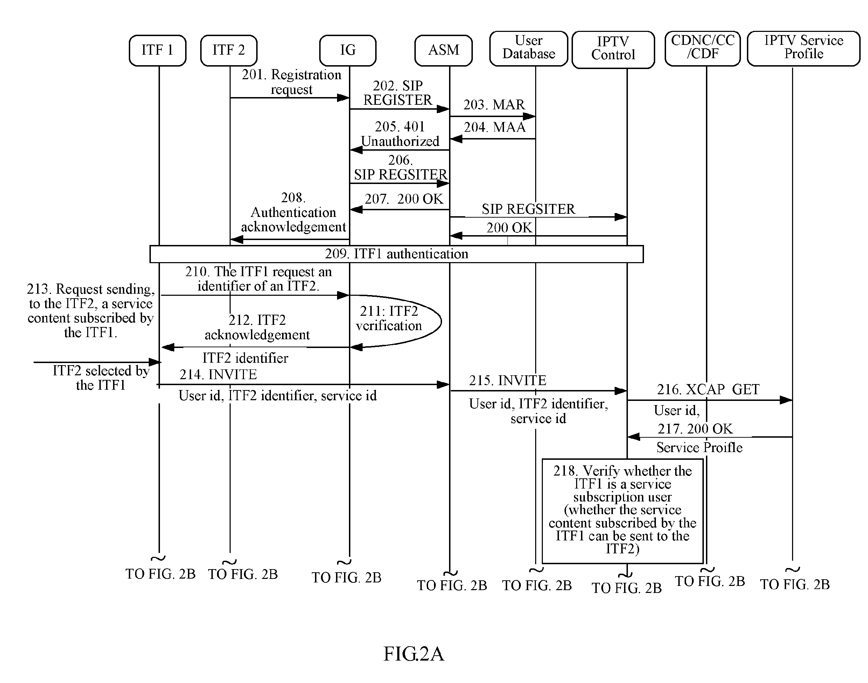

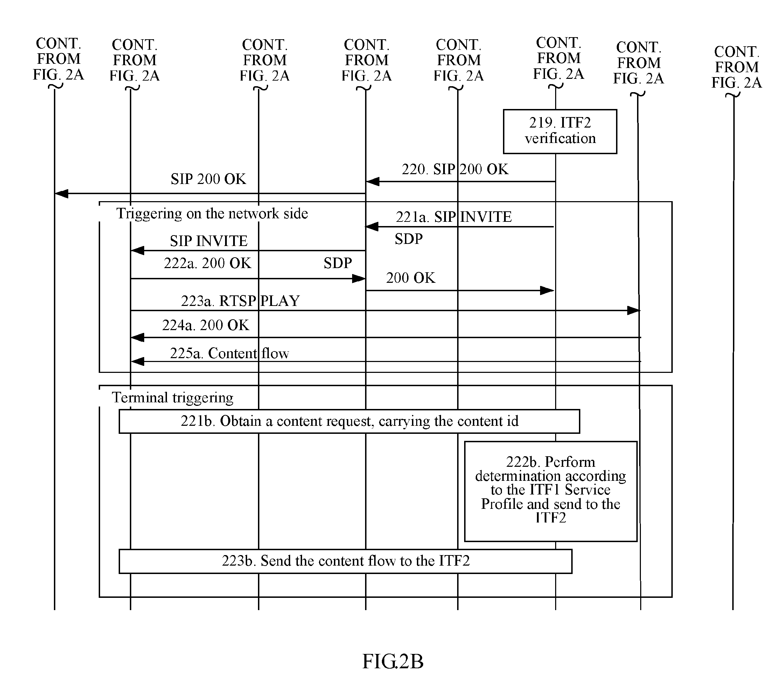

FIG. 1 is a flowchart of a method according to Embodiment 1 of the present invention, and FIG. 2 is a sequence diagram of a possible implementation manner according to the method of Embodiment 1 of the present invention. With reference to FIG. 1 and FIG. 2, the following specifically describes a method for playing service content, which is subscribed by a first network television terminal ITF1, on a second network television terminal IPTV terminal function 2 (IPTV Terminal Function, hereinafter referred to as ITF), where the first and second network television terminals ITF1 and ITF2 are IPTV subscription terminals. They may be subscription terminals of different users, and the subscribed service content may be different.

In the method provided in Embodiment 1, in S110, a network side receives a request message requesting play, on the second network television terminal ITF2, the service content subscribed by the first network television terminal ITF1. In S120, the network side obtains a service profile of the ITF1 and an identifier of the ITF2 according to the request message. Then, in S130, the network side sends the service content subscribed by the ITF1 to the ITF2 according to the service profile of the ITF1 and the identifier of the ITF2. S120 may include the following process: an ITF2 authentication process; an ITF1 authentication process; and a process of the ITF1 requesting obtaining the identifier of the ITF2.

With reference to the sequence diagram of FIG. 2, specifically, for ease of description and corresponding to the sequence diagram of FIG. 2, the process of S120 is specifically described first. S120 may include the following:
201. The ITF2 sends a registration request to an IG, requesting using an IPTV network.
202. The IG forwards the registration request to an ASM server, where the request carries information read from an ISIM, IMPI and IMPU identifier information, and also includes IP address information of the IG.
203. The ASM server initiates an authentication request to a user database, and obtains authentication data of an IMPI identifier from the user database.
204. A user database server sends the authentication data to the ASM.
205. The ASM returns a SIP 401 Unauthorized unauthorized message to the IG and rejects the authentication request of the IG, where the 401 message carries WWW-Authenticate header domain and authentication information. After receiving the message, the IG verifies the authentication information.
206. The IG sends a new registration request to the ASM, carrying authentication information calculated by the ISIM.
207. The ASM returns a 200 OK response to the IG, indicating that authentication is successful, and the ASM notifies user authentication success information to an IPTV Control.
208. The IG notifies authentication response to the ITF2.
209. The process for the ITF1 to get authenticated to use a network is basically the same as 201 to 208.
210. The ITF1 sends a request to the IG, requesting to obtain the identifier of the ITF2, that is, obtain subscription identifier of the ITF2 from the IG. The method for obtaining the identifier of the ITF2 also includes obtaining the identifier of the ITF2, for example, by reading the identifier of a second terminal (for example, code scanning by reading a two-dimension code on the ITF2), through the transmission (for example, requesting the identifier of the ITF2 by using a wifi) in a near field communication mode, through a device discovery mechanism, and through manual input (for example, a telephone number and an address). For example, after the identifier of the ITF2 is obtained through a two-dimension code on the IG or ITF2, or a dynamically generated two-dimension code, the service content subscribed by the ITF1 is sent to the ITF2 for watching. Therefore, the information may be identifier information of the ITF2, IMPI information, IMPU information, IP address information, and other types of information. The request may also be directly sent by the ITF1 to the ITF2.
211. The IG sends an identifier to the ITF1. In 211, the determination process of the ITF2 may be added. For example, the determination process may include ITF2 manual determination, the ITF2 determining whether its own identifier can be sent to other terminals, and the ITF2 determining whether the function of providing an identifier is available. If yes, the obtained identifier of the ITF2 is encapsulated in a response message.
212. The ITF2 returns the response message, carrying identifier information of the ITF2.

With reference to the sequence diagram of FIG. 2, specifically, S 110 includes:
213. A user requests sending the service content subscribed by the ITF1 to the ITF2, where the ITF2 is selected by the ITF1.
214. The ITF1 sends a request message to the ASM, requesting to send the service content, which the ITF1 expects to watch, to the ITF2 according to subscription information of the ITF1, where the message carries identifier information of the ITF2, ITF1 user identifier information, information of a service identifier (service id), and the like. For example, the service identifier may be a network recording service identifier, a bookmark service identifier, a personalized channel service identifier, an application service identifier, and other identifiers related to an IPTV service.
215. After receiving the request message, the ASM server forwards the request message to the IPTV Control function entity. The IPTV Control function entity parses the request message to be a request message requesting to send the service content subscribed by the ITF1 to the ITF2 according to user information of the ITF1, and subscription information of an ITF1 user is further obtained.
216. The IPTV Control function entity sends request information of obtaining a service profile of an ITF1 user to an IPTV service profile server, where the request information carries identifier information of the ITF1 user.
217. The IPTV service profile server returns information of an IPTV service profile related to the ITF1.
218. In an embodiment of the present invention, before sending service profile information of the ITF1 to the ITF2, the IPTV Control may implement the determination process. The determination process may include: determining whether the ITF1 is a subscribed user that may request sending subscription service content of the ITF1 to the ITF2. In an embodiment of the present invention, the determination process may be completed before 216.

In S130, the network side sends the service content subscribed by the ITF1 to the ITF2 according to the service profile of the ITF1 and the identifier of the ITF2. With reference to the sequence diagram of FIG. 2, specifically, S130 may include:
219. In an embodiment of the present invention, the IPTV Control function entity further implements the determination process. The determination process may include: determining whether the ITF2 is a valid terminal for receiving service content, determining whether the ITF2 is set with the preference of playing the content not related to ITF2 subscription, and determining whether the ITF2 is capable of displaying the content subscribed by the ITF1.
220. If the determination result is yes, the IPTV Control returns a success response message to the ITF1.

After the preceding process is completed, optionally, playing ITF1 user subscription content may be implemented in the following two methods:
Method 1 is that the network side triggers the playing of the content subscribed by the ITF1 user on the ITF2, specifically including:
   221 a. The network side initiates a request to the ITF2, for example, pushing service content description information corresponding to a service profile of the ITF1 or subscribed service content to the ITF2 in a push mode. The service content description information may include description information of a single piece of subscribed service content or description information (such as a program guide) of a plurality of pieces of subscription content. The pushed service content may be service content corresponding to user preference set in the service profile, such as an advertisement that the user expects to receive.
   222a. If the ITF2 expects to watch content or content-related information pushed by triggering by the network side, it returns a response message, indicating that it expects to watch; if the ITF2 does not expect to watch, it returns a response message, indicating service termination. The following process is the process in which the user selects to expect to continue watching:
   223a. According to the service content description information corresponding to the received service profile of the ITF1, the ITF2 sends service content play message (such as an RTSP Play message) to a content server, and instructs the network side to play the related content which is selected by the user according to the service content description information.
   224a. The content server returns a success response message.
   225a. The content server sends corresponding content to the ITF2 so that the ITF2 may play the corresponding content.
Method 2 is that a terminal triggers the playing of the content subscribed by the ITF1 user on the ITF2, specifically including:
   221b. The ITF2 initiates, to the network side, a request message requesting playing the corresponding content, where the request message carries information such as a content id.
   222b. According to an IPTV service profile, the IPTV Control function entity utilizes a function module to perform determination and determine the need to send a message or content to the ITF2 terminal.
      Specifically, the determination to be completed by the determination function module in the IPTV Control function entity may include: determining that the content requested by the ITF2 to play is the content related to the IPTV service subscription of the ITF1 user; determining the ITF2 capability, and according to the ITF2 capability, sending content or converting content into the content which the ITF2 is capable of playing; and determining that the ITF2 is a valid terminal.
   223b. The IPTV Control sends the network television service content subscribed by the ITF1 to the ITF2.

Optionally, after the service ends, that is, the ITF1 does not expect to continue to play, on the ITF2, the IPTV service content subscribed by the ITF1, or the ITF2 does not expect to continue to play the service subscribed by the ITF1, the ITF1 or ITF2 may send a request message to notify an IPTV network to suspend the service, and optionally receive a response message from the network.

The method provided in Embodiment 1 of the present invention may also include the scenario where after the ITF1 sends a corresponding request to the ITF2 and subscription content of the ITF1 is sent to the ITF2 according to service profile information of the ITF1, the ITF2 or the IPTV network performs corresponding operations according to the information: the ITF2 obtains the content subscribed by the ITF1 and records the corresponding content locally on the ITF2 or after the IPTV network side records the content subscribed by the ITF1, when the time comes, the ITF2 locally prompts the ITF1 user to play the content, or the entity at the IPTV network side may send a notification message to the ITF2 to prompt the user to play the content. For example, if the ITF1 subscribes to record a television program at eight in the evening, but the ITF1 user is watching another program on the ITF2, the ITF2 may record the program, or after the IPTV network side completes the recording, the recorded program starts to be played when the time comes or after the ITF1 user performs a selection. At this time, if the program is recorded by the network, the network side may send a notification message to the ITF2 to instruct the ITF2 to play the recorded program. The notification may also include a plurality of recorded programs, instructing the ITF2 to select the program to be played.

According to Embodiment 1 of the present invention, the service content subscribed by the first network television terminal may be played on the second network television terminal. For example, the first network television terminal is a mobile phone of user A, and the second network television terminal is a television of user B. According to Embodiment 1, user A may trigger, through the mobile phone, the playing of the IPTV content, which is subscribed by user A, on the television of user B. This improves the flexibility of the user in playing the IPTV content and facilitates the transferring and playing of IPTV content between different users and different types of terminals.

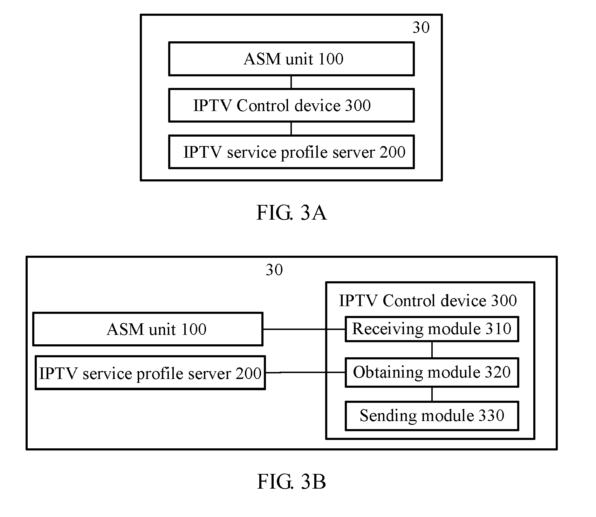

To implement the technical solution of Embodiment 1, an embodiment of the present invention provides a system for watching IPTV service content. FIG. 3A is a block diagram of an embodiment of a system 30 for watching IPTV service content. The system includes: an ASM unit 100, configured to receive a request message requesting playing subscription service content of the ITF1 on the ITF2, where the request message carries the identifier of the ITF2; an IPTV service profile server 200, configured to store an IPTV service profile; and an IPTV Control device 300, configured to obtain a service profile of the ITF1 from the IPTV service profile server 200 according to the request message sent from the ASM unit 100, and send the service content subscribed by the ITF1 to the ITF2 according to the service profile of the ITF1 and the identifier of the ITF2.

As shown in FIG. 3B, according to an embodiment of the system for watching IPTV service content, the IPTV Control device 300 includes: a receiving module 310, configured to receive the request message from the ASM unit 100; an obtaining module 320, configured to obtain the service profile of the ITF1 from the IPTV service profile server 200 according to the request message; and a sending module 330, configured to send the service content subscribed by the ITF1 to the ITF2 according to the service profile of the ITF1 and the identifier of the ITF2.

### Embodiment 2

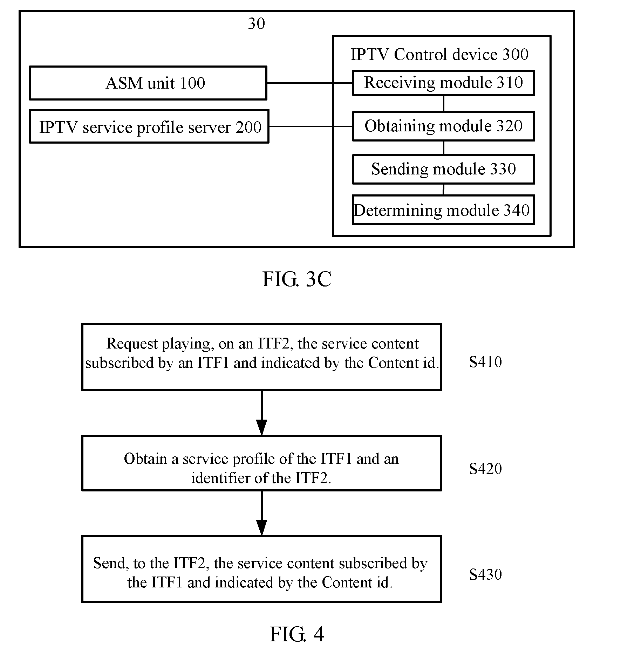

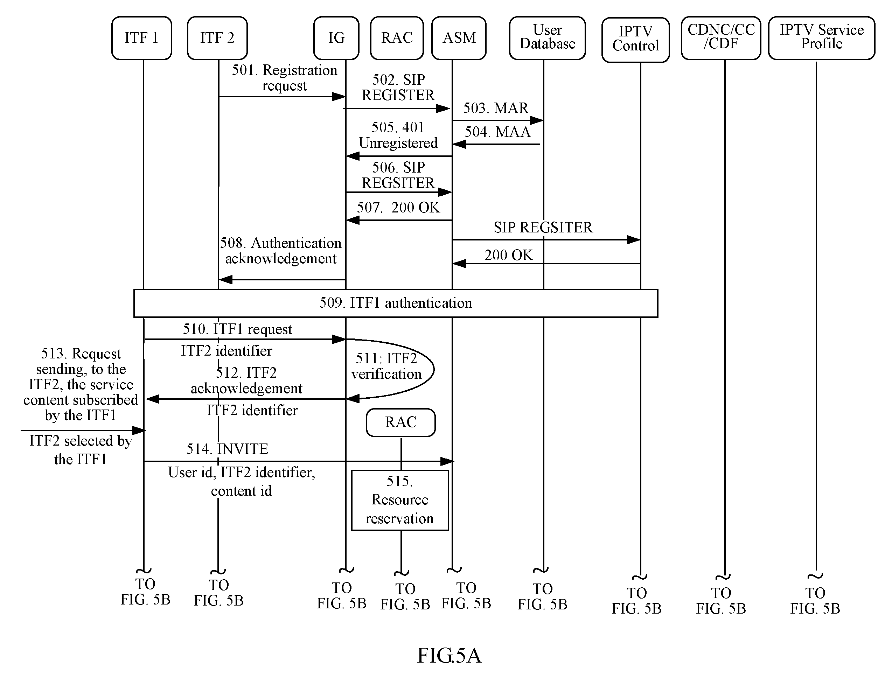

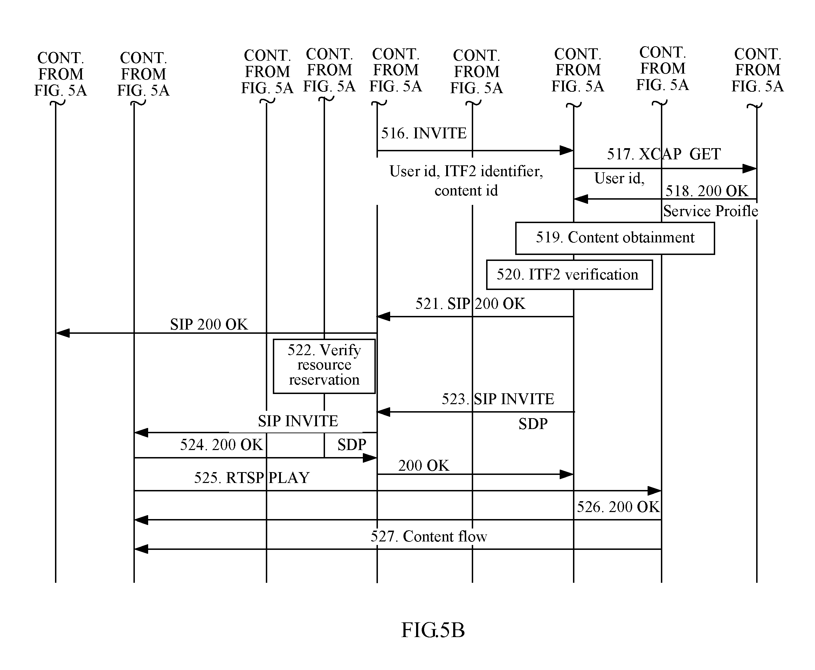

FIG. 4 is a flowchart of a method according to Embodiment 2 of the present invention, and FIG. 5 is a sequence diagram of a possible implementation manner of a method according to Embodiment 2 of the present invention. The following specifically describes a method provided in Embodiment 2 of the present invention in combination of FIG. 4 and FIG. 5 and with reference to FIG. 1 to FIG. 3. The difference between Embodiment 1 and Embodiment 2 is obtaining an IPTV service profile of an ITF1 for selected specific content and playing the specific content on an ITF2. The specific content is indicated by a content identifier Content id.

The flow of Embodiment 2 is basically similar to that of Embodiment 1, that is, including: in S410, receiving a request message requesting playing, on a second network television terminal ITF2, the specific service content subscribed by a first network television terminal ITF1 and indicated by the Content id; in S420, obtaining a service profile of the ITF1 and an identifier of the second network television terminal ITF2 according to the request message; and in S430, sending, by a network side, the specific service content subscribed by the ITF1 to the ITF2 according to the service profile of the ITF1. In an embodiment of the present invention, the specific details 501 to 523b specifically included in the process from S410 to S430 are basically similar to the specific details 201 to 223b in Embodiment 1.

The parts which are the same in Embodiment 2 and Embodiment 1 are not repeated herein. The following mainly describes the difference between Embodiment 2 and Embodiment 1. The difference between S410 of Embodiment 2 and S110 of Embodiment 1 is that the network side receives a request message requesting playing, on the ITF2, the specific service content subscribed by the ITF1 and indicated by the Content id. Therefore, in S430, the network side sends the specific service content, which is subscribed by the ITF1 and is indicated by the Content id, to the ITF2 according to the service profile of the ITF 1.

With reference to FIG. 4 and FIG. 5, specifically, S410 includes:
513. A user requests sending the service content, which is subscribed by the ITF1, to the ITF2, where the ITF2 is selected by the ITF1.
514. Send a request message to an ASM, requesting to send the service content subscribed by the ITF1 to the ITF2 for displaying, where the message carries information such as identifier information of the ITF2, ITF1 user identifier information, and content identifier Content id information.
515. An ASM server completes resource reservation with an RAC server.
516. After receiving the request message, the ASM server forwards the request message to an IPTV Control function entity.
517. The IPTV Control function entity parses the request message to be a request message requesting sending the content, which is subscribed by the ITF1 and is indicated by the content identifier Content id, to the ITF2 according to IPTV Service Profile information of an ITF1 user, and then further obtains the subscription information of the ITF1 user.

With reference to FIG. 4 and FIG. 5, specifically, S430 may include:
519. According to the Content id sent by ITF1 and information of an IPTV service profile, The IPTV Control obtains related content from a content server and/or completes resource negotiation.
520. In an embodiment of the present invention, the IPTV Control function entity implements further determination. The determination process may include determining whether the ITF2 is a valid terminal for receiving service content, determining whether the ITF2 is set with the preference of playing the content not related to ITF2 subscription, and determining whether the ITF2 is capable of displaying the content subscribed by the ITF1.
521. If the content can be played, the IPTV control function entity sends a success acknowledge message (a 200 OK message) to the ASM, and the ASM forwards the success acknowledge message to the ITF1.
522. The ASM confirms resource reservation with a RAC (Resource and Admission Control) server, for example, reserving sufficient bandwidth.
523. The IPTV Control function entity sends a request message to the ITF2, requesting the ITF2 to access, in order to obtain the program content (indicated by the Content id) which the ITF1 expects to display on the ITF2. The request message is forwarded by the ASM to the ITF2.
524. The ITF2 returns a 200 OK response message to the IPTV Control. The response message is forwarded by the ASM to the IPTV Control function entity.
525. According to related information in the request message sent by the IPTV function entity in 523, the ITF2 accesses an IPTV profile server to obtain IPTV content. The ITF2 may send a play request to the content server or a transmission server, for example, an RTSP Play request message.
526. The content server returns a success response.
527. The content subscribed by the ITF1 and indicated by the Content id is sent to the ITF2 terminal for playing.

Optionally, the content indicated by the Content id may be the content which is obtained by the IPTV Control and is sent to the ITF2 for reception, or may be the content indicated by the Content id and provided by the content server for the ITF2 after the IPTV control notifies the ITF2 of the access parameter required for obtaining the content and the ITF2 accesses the server where the content is located.

According to Embodiment 2 of the present invention, the specific service content subscribed by the first network television terminal may be played on the second network television terminal. For example, the first network television terminal is a mobile phone of user A, and the second network television terminal is a television of user B. According to Embodiment 1, user A may trigger, through the mobile phone, the playing of the IPTV content, which is subscribed by user A, on the television of user B. User A may send an identifier of specific program content, such as a name of a film and a play bookmark, to a network side through the mobile phone, and then the network side continues to play the film, which has been watched or subscribed by user A, on the television of user B according to the instruction of user A.

The system for watching IPTV service content shown in FIG. 3A and FIG. 3B may be configured to implement the technical solution of Embodiment 2 of the present invention. Therefore, a receiving module 310 of an IPTV Control device 300 is further configured to receive the Content id of the ITF1 from the ASM unit 100. While, a sending module 330 is specifically configured to send the service content, which is subscribed by the ITF1 and indicated by the Content id, to the ITF2 according to the service profile of the ITF1 and the identifier of the ITF2 obtained by the obtaining module 320.

FIG. 3 shows a specific embodiment of a system for watching IPTV service content according to the embodiment of the present invention. As shown in FIG. 3C, according to Embodiment 1 and Embodiment 2 of the present invention, the IPTV Control device 300 may further include a determination module 340, configured to determine whether the ITF1 is a subscribed terminal that may request sending the subscription content of the ITF1 to the ITF2; or determine whether the ITF2 is a valid terminal for receiving service content; or determine whether the ITF2 is a subscribed terminal that may play non-ITF2 subscription service content; or determine whether the ITF2 is capable of displaying the subscription content of the ITF1. Under this condition, the sending module 330 is specifically configured to send the service content subscribed by the ITF1 to the ITF1 according to the IPTV service profile of the ITF1 and the identifier of the ITF2 when the determining module 340 determines that the ITF1 is a subscribed terminal that may request sending the subscription content of the ITF1 to the ITF2 or determines that the ITF2 is a valid terminal for receiving service content or determines that the ITF2 is a subscribed terminal that may play the non-ITF2 subscription service content or determines that the ITF2 is capable of displaying the subscription content of the ITF1.

### Embodiment 3

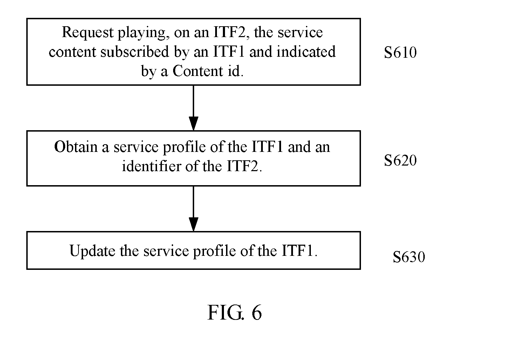

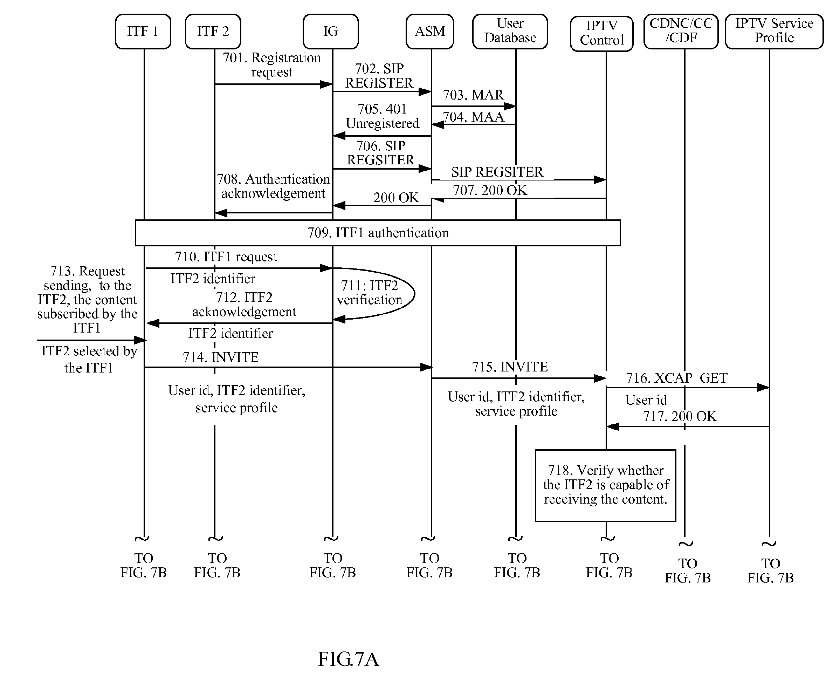

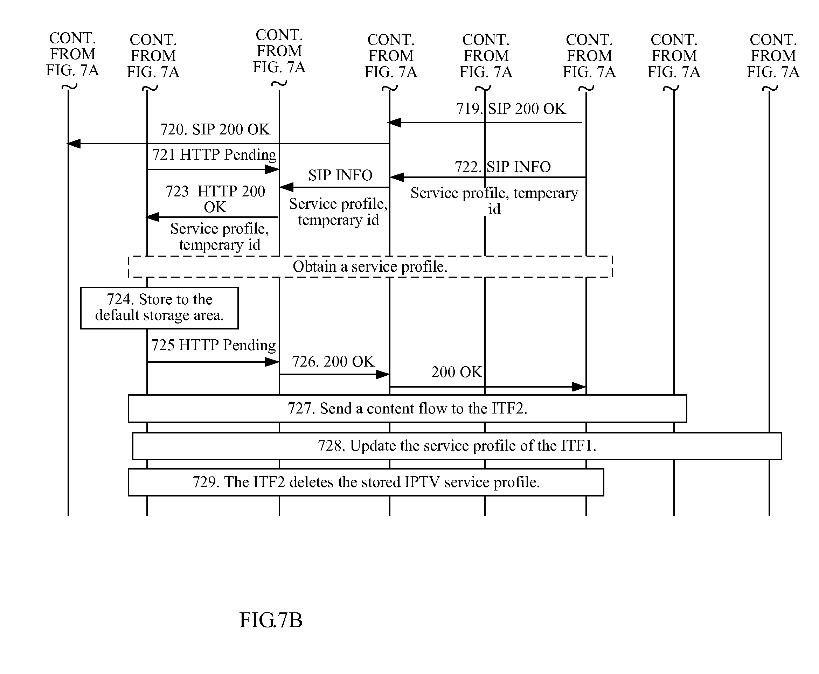

FIG. 6 is a flowchart of a method according to Embodiment 3 of the present invention, and FIG. 7 is a sequence diagram of a possible implementation manner of a method according to Embodiment 3 of the present invention. According to Embodiment 3, an ITF2 may locally obtain information of an IPTV service profile set by an ITF1 user and save it locally, and the ITF2 performs operations locally, obtains and plays service content, and updates and maintains an IPTV service profile of an ITF1. The following specifically describes a method of Embodiment 3 of the present invention in combination of FIG. 6 and FIG. 7 and with reference to FIG. 1 to FIG. 3.

As shown in FIG. 6, the method of Embodiment 3 includes: in S610, receiving, by a network side, a request message requesting playing, on a second network television terminal ITF2, service content subscribed by a first network television terminal ITF1; in S620, obtaining the IPTV service profile of the ITF1 and an identifier of the second network television terminal ITF2 according to the request message; and in S630, receiving an update request message which is sent by the ITF2 according to the IPTV service profile and updating the information of the IPTV service profile of the ITF1 according to the update message.

S610 and S620 are basically similar to S110 and S120 in the method of Embodiment 1, and therefore details are not repeated.

With reference to FIG. 6 and FIG. 7, the following specifically describes the possible specific implementation manner of S630.

S630 may include the following:
716. An IPTV Control function entity sends, to an IPTV service profile server, a request message of obtaining the IPTV service profile of the ITF1, where the request message carries identifier information of the ITF1 user.
717. The IPTV service profile server returns the information of the IPTV service profile related to the ITF1 to the IPTV Control function entity.
718. According to an exemplary embodiment, the IPTV Control function entity further implements a determination process. The determination process may include: determining whether the ITF2 is a valid terminal for receiving service content, determining whether the ITF2 is set with the preference of playing the content not related to ITF2 subscription, and determining whether the ITF2 is capable of displaying the content subscribed by the ITF1.
719. If a determination result is that the content may be sent to the ITF2 or a function entity at a network side may convert the content into the content which the ITF2 is capable of displaying, an IPTV Control returns a success response message to an ASM; if the content cannot be sent to the ITF2, a failure response message is returned to the ASM.
720. The ASM forwards the success or failure response to the ITF1; if a failure is returned, the service process ends. The following process is an example of a subsequent process after a success response:
721. The ITF2 sends an HTTP Pending message to an IG. When the IG needs to send a message to the ITF2, the message may be carried in the response message of the HTTP Pending message.
722. The IPTV Control sends a SIP INFO message to the ITF2, where the SIP INFO message carries identifier information of the IPTV service profile related to the ITF1. The ASM forwards the message to the IG.
723. In an embodiment of the present invention, the IG forwards a 722 SIP INFO message to the ITF2 through an HTTP 200 OK message. The HTTP 200 OK message is a response message of the HTTP Pending message in 721. The ITF2 may obtain the information of the IPTV service profile of the ITF1 from the IPTV Control and carry the information in the message.
724. If the information of the IPTV service profile of the ITF1 can be obtained, the ITF2 stores the obtained information of the IPTV service profile of the ITF1 in a default storage area. The stored IPTV service profile related to the ITF1 may be used to display, on the ITF2, the content subscribed by the ITF1.
725. The ITF2 sends an HTTP Pending message to the IG, carrying a success response message.
726. The IG returns a success response to the ASM; the ASM forwards the response message to the IPTV Control function entity.
727. A content server sends service content subscribed by the ITF1 to the ITF2.
728. When the service ends, if the IPTV service profile of the ITF1 needs to be updated, the ITF2 sends an update request, where the request message carries updated information of the IPTV service profile. The corresponding information of the IPTV service profile of the ITF1 is updated through the ITF2. After receiving the information, the network side performs updating according to identifier information of the ITF1.
729. According to an embodiment of the present invention, the ITF2 deletes the locally stored information of the IPTV service profile of the ITF1.

According to Embodiment 3 of the present invention, the ITF2 may obtain the IPTV service profile of the ITF1 and store it locally. The ITF2 may play, according to the obtained IPTV service profile of the ITF1, the service content subscribed by the ITF1, may update the stored IPTV service profile of the ITF1, and instruct the network side to update the IPTV service profile of the ITF1 stored in the service profile server after the playing is complete. The advantage of the design is as follows: for example, after a film subscribed by a mobile phone (as the first terminal ITF1) is played on a television (as the second terminal ITF2), the name and playing time (as service profile information) of the film played on the television may be saved in the server, so that the film whose playing is not complete may be continued to be played on the mobile phone or another terminal (such as another television) later.

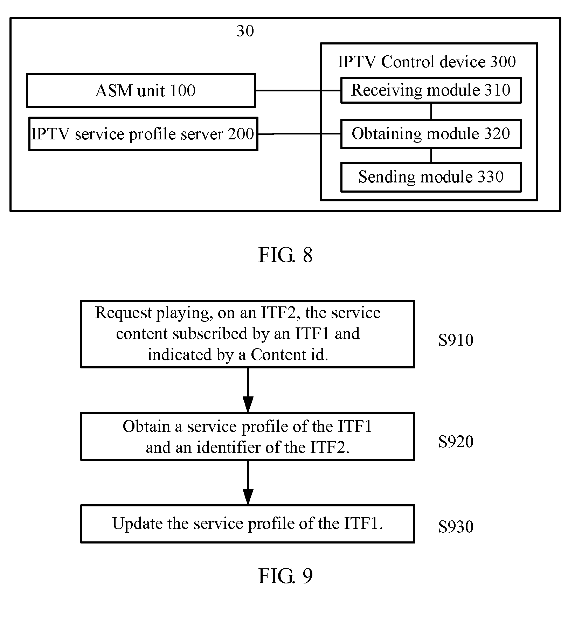

FIG. 8 is a block diagram of a system for watching IPTV service content according to Embodiment 3 of the present invention. The system shown in FIG. 8 is the improvement made on the system for watching IPTV service content shown in FIG. 3A and FIG. 3B and may be configured to implement the technical solution of Embodiment 3 of the present invention.

As shown in FIG. 8, a receiving module 310 of an IPTV Control device 300 is further configured to receive a service profile update request from the ITF2, where the request message carries updated information of the IPTV service profile subscribed by the ITF1; a sending module 330 is configured to send the service profile update request to an IPTV service profile server 200. The IPTV service profile server 200 is configured to update the information of the IPTV service profile subscribed by the ITF1 after receiving the service profile update request sent by the sending module 330.

### Embodiment 4

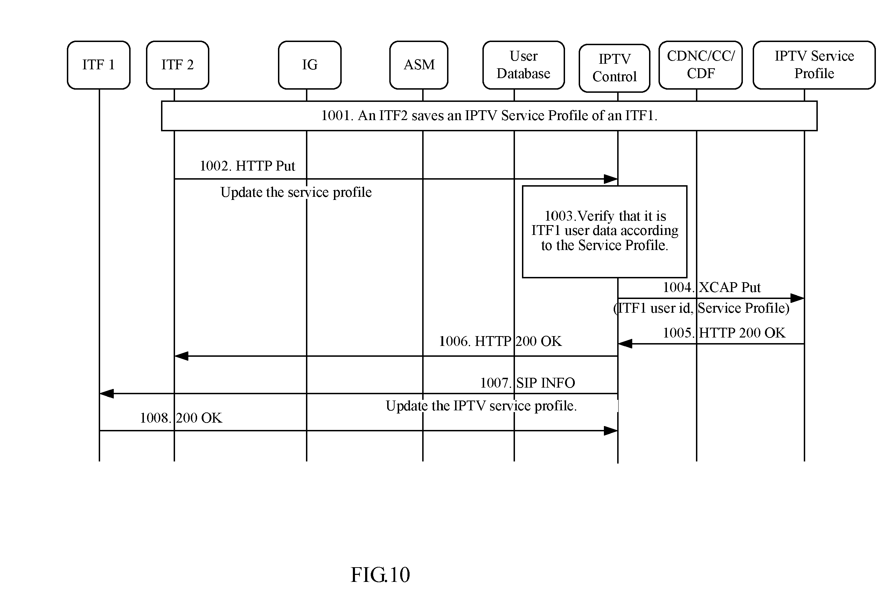

FIG. 9 is a flowchart of a method according to Embodiment 4 of the present invention, and FIG. 10 is a sequence diagram of a possible implementation manner of a method according to Embodiment 4 of the present invention. Embodiment 4 is the improvement made on Embodiment 3. The improvement lies in the process of updating an IPTV service profile. Other parts of Embodiment 4, that is, S910 to S920, are basically similar to S610 to S620 of Embodiment 3, and therefore details are not repeated. For brevity, the same parts in the sequence diagram of FIG. 10 and the sequence diagram shown in FIG. 7 are also omitted.

With reference to FIG. 9 and FIG. 10, the following specifically describes S930 of Embodiment 4, that is, receiving an update message which is sent by an ITF2 according to the IPTV service profile and updating the IPTV service profile of an ITF1 according to the update message.

S930 may include the following:
1001. The ITF2 performs change operations on the IPTV service profile of the ITF1, for example, saving new bookmark information and selecting to subscribe to a new personalized channel and a new program.
1002. The ITF2 sends a message carrying information of change of the IPTV service profile to an IPTV Control. The message may carry a user identifier of the ITF1. If service binding is performed at a network side, the message does not need to carry the user identifier of the ITF2, that is, when the ITF2 performs any operation that requires update of the IPTV service profile on a received IPTV service or IPTV content, the ITF2 sends the message.
1003. After receiving a request message, the IPTV Control function entity determines that the change operation is an operation of updating a service profile of the ITF1. The determination process may be performed according to information, such as an identifier of the ITF1, an identifier of the ITF2, and a previous session identifier, carried in the message. According to the determination, the IPTV Control stores the change operation to the IPTV service profile of an ITF1 user rather than storing the change operation to a service profile of the ITF2. For example, a bookmark set for a program through the ITF2 is saved in the IPTV service profile of the ITF1 user.
1004. The IPTV Control function entity sends a request message to an IPTV service profile server, where request message may carry information such as a user identifier of the ITF1 and a service profile index, and instructs the server to store the change operation.
1005. The IPTV service profile server returns a success response.
1006. The IPTV Control function entity returns a success response to the ITF2.
1007. According to an embodiment of the present invention, the IPTV Control function entity notifies the ITF1 after information of the IPTV service profile of the ITF1 is updated through the ITF2; that is, the IPTV Control function entity sends a notification message to the ITF1, where the notification message carries information of change of IPTV service profile information.
1008. The ITF1 returns a response message to the IPTV Control function entity.

With Embodiment 4 of the present invention, after the operation on information of the IPTV service profile of the ITF1 is performed through the ITF2, the IPTV service profile of the ITF1 at a network side can be updated through the ITF2.

The watching system shown in FIG. 8 may be configured to implement the method of Embodiment 4. Therefore, a sending module 330 of an IPTV Control device 300 is further configured to, after the IPTV service profile of the ITF1 is updated, send a notification to the ITF1 to notify the update operation.

According to the embodiment of the present invention, an ITF is used as an implementation example of an IPTV terminal device of a user, and specifically may be two separate physical entities, namely, an OITF and an IG, or may be a physical entity integrating the OITF and IG, or may be an independent OITF terminal.

### Embodiment 5

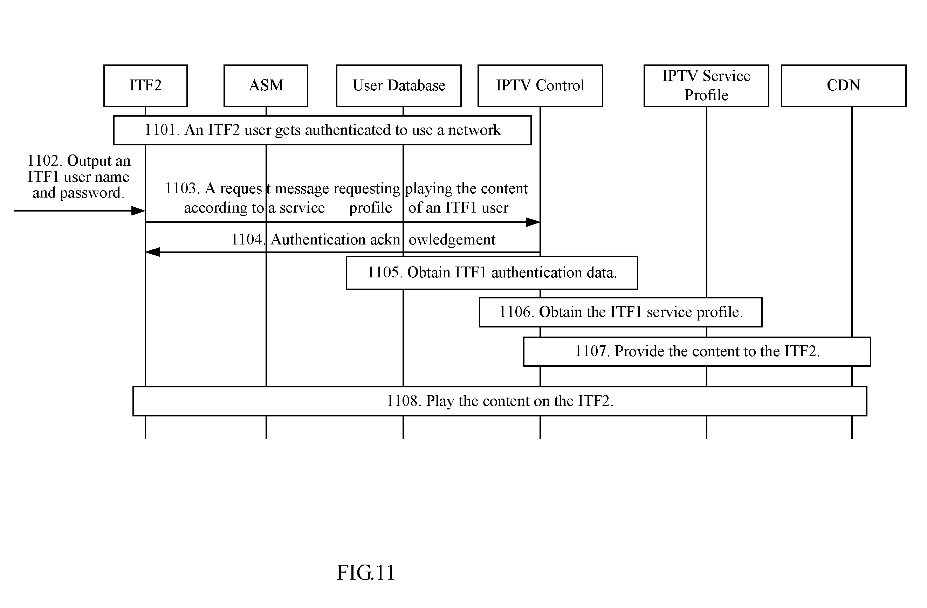

FIG. 11 is a sequence diagram of a method according to Embodiment 5 of the present invention. In the method of Embodiment 5, a user name and a password of an ITF1 are entered on an ITF2 terminal. Through the entered user name and password, authentication data is obtained and an IPTV service profile of the ITF1 is further obtained, or through the user name and the password, the IPTV service profile of the ITF1 is obtained and service content subscribed by an ITF1 user is further sent to the ITF2. With reference to FIG. 11, Embodiment 5 specifically includes:
1101. The ITF2 gets authenticated to use a network.
1102. Enter the user name and the password on the ITF2 and log in to an IPTV network. Here, it provides a function that a user enters the user name and the password on the ITF2 and securely accesses an IPTV service profile related to ITF1 subscription. For example, the information to be transmitted is encrypted by using application software, and is transmitted through a security encryption mechanism of the ITF2.
1103: The ITF2 sends, to an IPTV Control, a request message of playing content according to a user profile of the ITF1, where the request carries information of the user name and password entered by a user.
1104. The IPTV Control function entity returns an acknowledgement response.
1105. Optionally, the IPTV Control function entity sends a query request to a user database function entity to obtain the authentication data of the ITF1. The user obtains information of the user profile of the ITF1. Of course, if the information of the user profile of the ITF1 does not need to be obtained through the authentication data, the procedure is omitted. While, the user profile of the ITF1 is obtained according to the carried user name and password.
1106. The IPTV Control initiates a request of obtaining the service profile of the ITF1 to an IPTV Service Profile server and obtains the service profile of the ITF1.
1107. The IPTV Control negotiates the service content, which is to be provided for the ITF2, with a content server CDN.
1108. The ITF2 receives, from the CDN server, the content requested by the ITF2 and plays the content.

According to the embodiment of the present invention, an IPTV user may use a subscribed terminal to play service content subscribed by another terminal, to implement the flexible transferring and switching of IPTV service content between terminals. In addition, the IPTV user may transplant service content played by different subscribed terminals to other terminals for continuous playing. This breaks away from the restriction of a terminal imposed on IPTV service content, thereby greatly expanding usage scenarios of the IPTV service content.

According to the embodiment of the present invention, through subscription, a user may obtain the service related to IPTV subscription information through an external device while watching by using another terminal. According to the embodiment of the present invention, the user may enjoy subscription information at will and enjoy a subscribed service at any place. This may be implemented without the need of any service process such as session transfer, or without operations each time, and therefore the user watches through the external device and enjoys the same user experience as good as it is at home.

A person of ordinary skill in the art may understand that the method and system disclosed in this specification are only exemplary, and the process included in the method is not limited to the sequence described in this document and may be adjusted according to specific requirements and the technical implementation convenience. Besides the content enumerated in the above, the method and system may also include other processes and modules according to the requirements of specific application scenarios.

A person of ordinary skill in the art may appreciate that, in combination with the examples described in the embodiments disclosed in this specification, units and algorithm steps may be implemented by electronic hardware, computer software, or a combination thereof. In order to clearly describe the interchangeability between the hardware and the software, the foregoing has generally described compositions and steps of every embodiment according to functions. Whether the functions are performed by hardware or software depends on particular applications and design restriction requirements of the technical solutions. A person skilled in the art may use different methods to implement the described functions for each particular application, but it should not be considered that the implementation goes beyond the scope of the present invention.

The steps of a method or algorithm described in combination with the embodiments disclosed herein may be embodied directly in hardware, in a software module executed by a processor, or in a combination of the two. The software module may be located in a Random Access Memory (RAM), a computer memory, a Read Only Memory (ROM), an Electrically Programmable ROM, an Electrically Erasable Programmable ROM, a register, a hard disk, a removable disk, a CD-ROM, or any other storage media well-known in the prior art.

Although some embodiments of the present invention are shown and described, a person skilled in the art should understand that, various modifications could be made on these embodiments without departing from the principle and the idea of the present invention, and such modifications should fall within the scope of the present invention.

## Claims

1. A method for watching service content of an Internet protocol television, comprising:
receiving a request message requesting playing, on a second terminal, service content subscribed by a first terminal;
obtaining a service profile of the first terminal and an identifier of the second terminal according to the request message; and
sending the service content subscribed by the first terminal to the second terminal according to the service profile of the first terminal and the identifier of the second terminal.

2. The method according to claim 1, wherein the obtaining the identifier of the second terminal comprises:
obtaining the identifier of the second terminal sent from the first terminal.

3. The method according to claim 1 or 2, wherein the request message comprises:
a service identifier sent from the first terminal, wherein the service identifier is used to indicate that the request message is used to request sending the service content subscribed by the first terminal to the second terminal.

4. The method according to any one of claims 1 to 3, further comprising:
obtaining a content identifier sent from the first terminal; wherein
the sending the service content subscribed by the first terminal to the second terminal according to the service profile of the first terminal and the identifier of the second terminal specifically is:
sending the service content, which is subscribed by the first terminal and is indicated by the content identifier, to the second terminal according to the service profile of the first terminal and the identifier of the second terminal.

5. The method according to any one of claims 1 to 4, wherein before the sending the service content subscribed by the first terminal to the second terminal according to the service profile of the first terminal and the identifier of the second terminal, the method further comprises:
determining that the first terminal is a subscribed terminal that may request sending the content subscribed by the first terminal to the second terminal; or
determining that the second terminal is a valid terminal for receiving service content; or
determining that the second terminal is a subscribed terminal that is capable of playing service content which is not subscribed by the second terminal; or
determining that the second terminal is capable of displaying the content subscribed by the first terminal.

6. The method according to claim 1, wherein before the receiving the request message requesting playing, on the second terminal, the service content subscribed by the first terminal, the method further comprises:
according to authentication information of the first terminal, authenticating the first terminal to use a network; and
according to authentication information of the second terminal, authenticating the second terminal to use the network;
and the obtaining the service profile of the first terminal comprises:
obtaining the service profile of the first terminal according to the authentication information of the first terminal;
and the sending the service content subscribed by the first terminal to the second terminal according to the service profile of the first terminal and the identifier of the second terminal specifically is:
receiving a network television service request sent by the second terminal;
determining that the network television service request is used to request transferring subscription service content corresponding to the service profile of the first terminal; and
sending the service content subscribed by the first terminal to the second terminal according to the service profile of the first terminal.

7. The method according to claim 3, wherein the service identifier comprises one or more of the following service identifiers:
a network recording service identifier, a bookmark service identifier, a personalized channel service identifier, and an application service identifier.

8. The method according to any one of claims 1 to 7, further comprising:
receiving an update request message sent from the second terminal, and updating the service profile of the first terminal according to the update request message; and
notifying the update operation to the first terminal.

9. The method according to any one of claims 1 to 5, wherein the sending the service content subscribed by the first terminal to the second terminal according to the service profile of the first terminal and the identifier of the second terminal comprises:
sending service content description information corresponding to the service profile of the first terminal to the second terminal according to the identifier of the second terminal;
receiving service content play message which is sent by the second terminal according to the service content description information, wherein the service content play message is used to indicate the service content which is subscribed by the first terminal and is selected by a user according to the service content description information; and
sending the service content, which is subscribed by the first terminal and is selected by the user, to the second terminal according to the service content play message.

10. The method according to any one of claims 1 to 5, wherein the sending the service content subscribed by the first terminal to the second terminal according to the service profile of the first terminal and the identifier of the second terminal comprises:
receiving the request message initiated by the second terminal to a network side, requesting playing the corresponding content, wherein the request message of playing the corresponding content carries the content identifier; and
determining, according to the service profile of the first terminal, whether to send, to the second terminal, the service content indicated by the content identifier; if yes, sending, to the second terminal, the service content indicated by the content identifier.

11. The method according to claim 2, wherein the obtaining the identifier of the second terminal sent from the first terminal comprises: obtaining the identifier of the second terminal sent from the first terminal, where the first terminal obtains the identifier of the second terminal by reading the identifier of the second terminal, by transferring the identifier of the second terminal in a near field communication mode, by using a device discovery mechanism, or by manual input or any combination of the manners.

12. A system for watching service content of an Internet protocol television, comprising:
an authentication and session management unit, configured to receive a request message requesting playing, on a second terminal, service content subscribed by a first terminal, wherein the request message carries an identifier of the second terminal;
an Internet protocol television service profile server, configured to store an Internet protocol television service profile; and
an Internet protocol television control device, configured to obtain a service profile of the first terminal from the Internet protocol television service profile server according to the request message sent from the authentication and session management unit, and send the service content subscribed by the first terminal to the second terminal according to the service profile of the first terminal and the identifier of the second terminal.

13. The system according to claim 12, wherein the Internet protocol television control device comprises:
a receiving module, configured to receive the request message from the authentication and session management unit;
an obtaining module, configured to obtain the service profile of the first terminal from the Internet protocol television service profile server according to the request message; and
a sending module, configured to send the service content subscribed by the first terminal to the second terminal according to the service profile of the first terminal and the identifier of the second terminal.

14. The system according to claim 13, wherein the receiving module is further configured to receive a content identifier of the first terminal from the authentication and session management unit; and
the sending module is specifically configured to send the service content, which is subscribed by the first terminal and indicated by the content identifier, to the second terminal according to the service profile of the first terminal and the identifier of the second terminal obtained by the obtaining module.

15. The system according to claim 13 or claim 14, wherein the Internet protocol television control device further comprises:
a determining module, configured to determine whether the first terminal is a subscribed terminal that may request sending the content subscribed by the first terminal to the second terminal; or determine whether the second terminal is a valid terminal for receiving service content; or determine whether the second terminal is a subscribed terminal that is capable of playing service content which is not subscribed by the second terminal; or determine whether the second terminal is capable of displaying the content subscribed by the first terminal; and
the sending module, specifically configured to send the service content subscribed by the first terminal to the second terminal according to the service profile of the first terminal and the identifier of the second terminal when the determining module determines that the first terminal is a subscribed terminal that may request sending the content subscribed by the first terminal to the second terminal or determines that the second terminal is a valid terminal for receiving service content or determines that the second terminal is a subscribed terminal that is capable of playing the service content which is not subscribed by the second terminal or determines that the second terminal is capable of displaying the content subscribed by the first terminal.

16. An Internet protocol television control device, comprising:
a receiving module, configured to receive a request message requesting playing, on a second terminal, service content subscribed by a first terminal;
an obtaining module, configured to obtain a service profile of the first terminal and an identifier of the second terminal according to the request message; and
a sending module, configured to send the service content subscribed by the first terminal to the second terminal according to the service profile of the first terminal and the identifier of the second terminal.

17. The device according to claim 16, wherein the receiving module is further configured to receive a content identifier from the first terminal; and
the sending module is specifically configured to send the service content, which is subscribed by the first terminal and is indicated by the content identifier, to the second terminal according to the service profile of the first terminal and the identifier of the second terminal obtained by the obtaining module.

18. The device according to claim 16 or claim 17, wherein the device further comprises:
a determining module, configured to determine whether the first terminal is a subscribed terminal that may request sending the content subscribed by the first terminal to the second terminal; or determine whether the second terminal is a valid terminal for receiving service content; or determine whether the second terminal is a subscribed terminal that is capable of playing service content which is not subscribed by the second terminal; or determine whether the second terminal is capable of displaying the content subscribed by the first terminal; and
the sending module, specifically configured to send the service content subscribed by the first terminal to the second terminal according to the service profile of the first terminal and the identifier of the second terminal when the determining module determines that the first terminal is a subscribed terminal that may request sending the content subscribed by the first terminal to the second terminal or determines that the second terminal is a valid terminal for receiving service content or determines that the second terminal is a subscribed terminal that is capable of playing the service content which is not subscribed by the second terminal or determines that the second terminal is capable of displaying the content subscribed by the first terminal.
